# EUROPEAN PATENT SPECIFICATION

(11) **EP 2 574 759 B1**
(45) Date of publication and mention of the grant of the patent: **22.05.2019**
(21) Application number: 12184370.0
(22) Date of filing: 14.09.2012
(51) Int. Cl.: F02C 7/275, F02C 7/32, F02C 7/36

(54) **Motor-generator turbomachine starter**
Bimodaler Starter einer Turbomaschine
Dispositif de démarrage bimodal d'une turbomachine

(30) Priority: 27.09.2011 US 201113246827
(43) Date of publication of application: 03.04.2013
(73) Proprietor: Hamilton Sundstrand Corporation, Charlotte, NC 28217 (US)
(72) Inventor: Koenig, Andreas C., Machesney Park, IL 61115 (US); Finney, Adam M., Rockford, IL 61114 (US)
(74) Representative: Dehns

(56) References cited:
- WO-A1-2011/007078
- US-A1- 2007 234 739
- US-A1- 2009 322 088
- US-B1- 6 838 778

## Description

### BACKGROUND

This disclosure relates generally to starting - and providing power to the accessories of - a turbomachine.

Turbomachines are used to propel aircraft, for example. A typical turbomachine includes a fan section, a compression section, a combustor section, and a turbine section. Turbomachines have at least one rotor in the compression section. The rotor must be accelerated to a relatively high rotational speed until the rotor is rotating fast enough to sustain operation of the turbomachine. Starters are used to accelerate the rotor. Example starters include air turbine starters, jet fuel starters, and electric motor starters.

In some current designs, a first electric motor rotates the rotor during start-up of the turbomachine. A second electric motor powers the accessories of the turbomachine, such as a full-authority digital electronic control (FADEC). The first motor is much larger than the second motor. The second motor is typically a low-voltage, low-power, permanent magnet generator.

WO2011/007078 and US 6,838,778 teach turbomachine starter assemblies.

### SUMMARY

According to the present invention, a turbomachine and starter assembly acccording to claim 1 and a method of powering turbomachine accessories according to claim 9 are provided. The turbomachine and starter assembly includes a motor-generator that selectively operates in a motor mode or a generator mode. The motor-generator provides a rotational input to a turbomachine when operating in the motor mode. The motor-generator generates a supply of electrical power when operating in the generator mode. The supply of electrical power is used to power accessories of the turbomachine.

The motor-generator that is selectively operated in a motor mode or a generator mode. The assembly includes a gearing arrangement rotatably coupling the motor-generator with the turbomachine. The motor-generator in the motor mode rotates the turbomachine to start the turbomachine. The motor-generator in the generator mode is rotated by the turbomachine. The motor-generator in the generator mode generates a supply of electrical power that is used to power accessories of the turbomachine.

An exemplary method of powering turbomachine accessories includes rotating a turbomachine during a start-up of the turbomachine using a motor-generator and generating a supply of power with the motor-generator after the start-up. The method uses the supply of power to power an accessory of the turbomachine.

### DESCRIPTION OF THE FIGURES

The various features and advantages of the disclosed examples will become apparent to those skilled in the art from the detailed description. The figures that accompany the detailed description can be briefly described as follows:
Figure 1 shows a schematic view of an example turbomachine and starter assembly.
Figure 2 shows a schematic view of the Figure 1 assembly in a motor mode.
Figure 3 shows a schematic view of the Figure 1 assembly in a generator mode.

### DETAILED DESCRIPTION

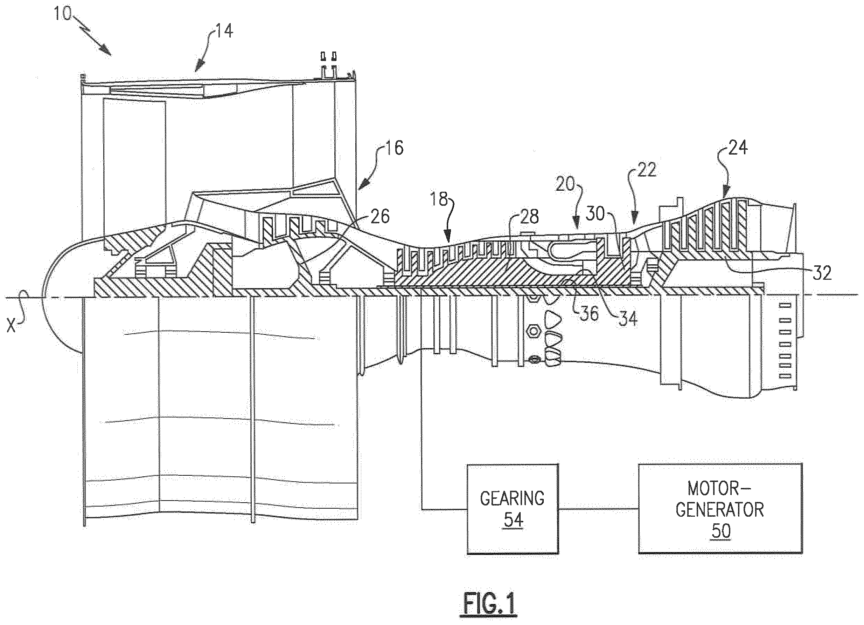

Referring to Figure 1, an example gas turbine engine 10 is used to propel an aircraft. The gas turbine engine 10 is an example type of turbomachine.

The gas turbine engine 10 is circumferentially disposed about an axis X. The gas turbine engine 10 includes a fan section 14, a low-pressure compressor section 16, a high-pressure compressor section 18, a combustion section 20, a high-pressure turbine section 22, and a low-pressure turbine section 24. Other example gas turbine engines may include more or fewer sections.

During operation, the low-pressure compressor section 16 and the high-pressure compressor section 18 compress air. The compressed air is then mixed with fuel and burned in the combustion section 20. The products of combustion are expanded across the high-pressure turbine section 22 and the low-pressure turbine section 24.

The low-pressure compressor section 16 includes a rotor 26. The high-pressure compressor section 18 includes a rotor 28. The example rotors 26 and 28 include alternating rows of rotating airfoils or rotating blades and static airfoils or static blades.

The high-pressure turbine section 22 includes a rotor 30. The low-pressure turbine section 24 includes a rotor 32. The rotors 30 and 32 rotate about the axis X in response to expansion across the high-pressure turbine section 22 and the low-pressure turbine section 24. The example rotors 30 and 32 include alternating rows of rotatable airfoils or rotatable blades and static airfoils or static blades.

The rotor 30 is coupled to the rotor 28 through a high-pressure spool 34. The rotor 32 is coupled to the rotor 26 through a low-pressure spool 36. Rotation of the rotors 30 and 32 rotates the rotors 28 and 26, which drives compression in the high-pressure compressor section 18 and the low-pressure compressor section 16, respectively. During operation of the gas turbine engine 10, the low-pressure spool 36 rotates across a greater range of rotational speeds than the high-pressure spool 34.

Although a turbomachine in this disclosure is described with reference to the gas turbine engine 10 having a two-spool architecture, the examples are not limited to such architectures. Other types of turbomachines may be used. Also, gas turbine engines having other architectures, such as a single-spool axial design, a three-spool axial design, may be used. That is, there are various turbomachines that could benefit from the examples disclosed herein.

In this example, a turbomachine starter assembly, such as a motor-generator 50, is rotatably coupled to the gas turbine engine 10 with a gearing arrangement 54. The motor-generator 50 is selectively operable in a motor mode or a generator mode (also referred to as generate mode). In the motor mode, the motor-generator 50 rotates the high-pressure spool 34 of the gas turbine engine 10. In the generator mode, the high-pressure spool 34 rotates the motor-generator 50. When rotated in the generator mode, the motor-generator 50 provides electrical power to various loads associated with accessories of the gas turbine engine 10.

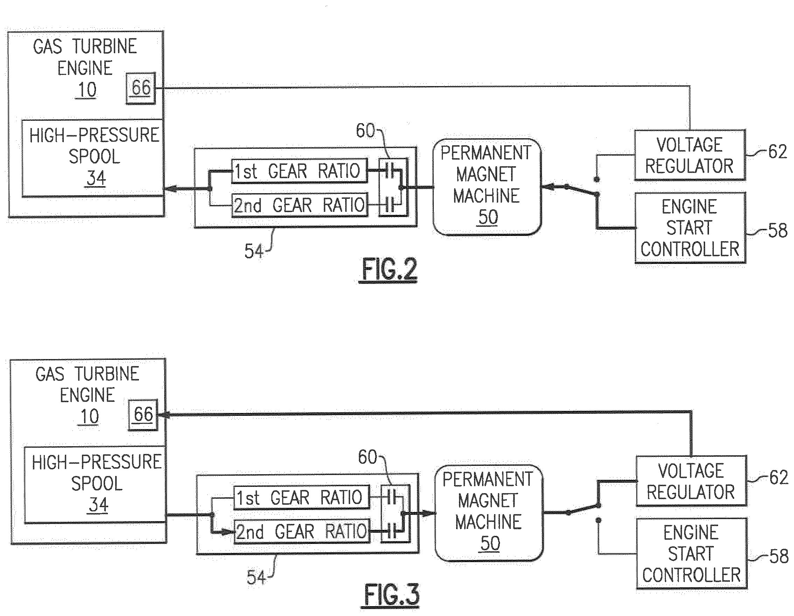

Referring to Figures 2 and 3 with continuing reference to Figure 1, the example gearing arrangement 54 operates with either a first gear ratio or a second gear ratio. The gearing arrangement 54 is alternated between the first gear ratio and the second gear ratio depending on whether the motor-generator 50 is operating in the motor mode or the generator mode. The gearing arrangement 54 thus acts as a two-speed transmission.

The example motor-generator 50 is a permanent magnet machine that has a relatively wide speed range. A power rating of the example motor-generator 50 is appropriate for starting the gas turbine engine 10. Notably, the motor-generator 50 is much smaller than motor-generators used elsewhere on the aircraft.

When the motor-generator 50 operates in the motor mode, the gearing arrangement 54 operates with the first gear ratio, which steps down rotation of the motor-generator 50 relative to rotation of the high-pressure spool 34. The motor-generator 50 thus spins faster than the high-pressure spool 34 when the motor-generator 50 operates in the motor mode. In one example, the motor-generator 50 spins 11 times faster than the high-pressure spool 34 when the motor-generator 50 operates in the motor mode. The relatively high rotational speed allows for a compact motor-generator.

When the motor-generator 50 operates in the generator mode, the gearing arrangement 54 operates with the second gear ratio, which is lower than the first gear ratio. Using the second gear ratio rather than the first gear ratio allows the motor-generator 50 to spin slower relative to the rotational speed of the high-pressure spool 34. The high-pressure spool 34 drives rotation of the motor-generator 50 using the second gear ratio.

In this example, during an operating procedure, an engine start controller 58 initiates movement of the motor-generator 50 to start rotation of the gas turbine engine 10. The engine start controller 58 also ensures that the gearing arrangement 54 is operating using the first gear ratio. The engine start controller 58 may initiate movement if a mechanical coupling 60 of the gearing arrangement 54, such as a clutch, to operate the gearing arrangement 54 with the first gear ratio or the second gear ratio.

The example motor-generator 50 rotates gearing arrangement 54 to directly rotate the high-pressure spool 34 during start-up. The motor-generator 50 thus provides a rotational input to the gas turbine engine 10 during start-up. In another example, the motor-generator 50 rotates gearing arrangement 54 to directly rotate the low-pressure spool 36 during start-up of the gas turbine engine 10.

After the high-pressure spool 34 of the gas turbine engine 10 reaches a self-sustaining rotational speed, the motor-generator 50 switches from the motor mode to the generator mode. The engine start controller 58 is also decoupled from the motor-generator 50. In the generator mode, the gearing arrangement 54 adjusts to operate with second gear ratio instead of the first gear ratio. The high-pressure spool 34 then drives the motor-generator 50 to generate a supply of electrical power.

In the generator mode, a voltage regulator 62 is used to regulate power from the motor-generator 50 and to ensure the power is at an appropriate level.

Notably, power from the motor-generator 50 is used to primarily power accessories 66 of the gas turbine engine 10, such as a full-authority digital electronic control (FADEC) or valves of the gas turbine engine 10. Accessories of the gas turbine engine 10 are accessories that are associated with, or mounted to, the gas turbine engine 10. The example accessories are electrically driven engine loads, which are required for operation of the gas turbine engine 10. A person having skill in this art and the benefit of this disclosure would understand suitable accessories of the gas turbine engine 10.

In some examples, power from the motor-generator 50 is used exclusively to power accessories of the gas turbine engine 10. In such examples, no other areas of the aircraft are provided with power from the motor-generator 50. Power from the motor-generator 50 is converted to direct current before powering the accessories 66.

In one example, the motor-generator 50 operates through its entire speed range when in the motor (or start) mode with the first gear ratio. The motor-generator 50 then changes to the generator mode with the second gear ratio. Changing to the second gear ratio prevents the high-pressure spool 34 from overspeeding the motor-generator 50 and damaging the motor-generator.

Operating the motor-generator 50 at the lower speeds with the second gear ratio also reduces mechanical and electromagnetic losses. Operating at the lower speed with the second gear ratio is possible because the power required to power accessories 66 of the gas turbine engine 10 is less than the power required to start the gas turbine engine 10. If the gear ratio between the motor-generator 50 and the gas turbine engine 10 were fixed, the motor-generator 50 would need to be much larger.

The preceding description is exemplary rather than limiting in nature. Variations and modifications to the disclosed examples may become apparent to those skilled in the art that do not necessarily depart from the scope of the invention, which is defined by the following claims.

## Claims

1. A turbomachine and starter assembly, comprising:
a turbomachine (10); and
a turbomachine starter assembly comprising a motor-generator (50) that selectively operates in a motor mode or a generator mode, the motor-generator providing a rotational input to a turbomachine when operating in the motor mode, the motor-generator generating a supply of electrical power when operating in the generator mode, wherein the supply of electrical power is used to power accessories (66) of the turbomachine; and
a gearing arrangement (54) rotatably coupling the motor-generator with the turbomachine; wherein the gearing arrangement has a gearing ratio, and the gearing ratio when the motor-generator is in the motor mode is higher than the gearing ratio when the motor-generator is in the generator mode;
**characterised in that** said assembly further includes a voltage regulator electrically coupled to the motor-generator in the generator mode and electrically decoupled from the motor-generator in the motor mode, the voltage regulator regulating the supply of electrical power when electrically coupled to the motor-generator.

2. The turbomachine and starter assembly of claim 1, wherein the supply of electrical power is used exclusively to power accessories of the turbomachine.

3. The turbomachine and starter assembly of claim 1 including an engine start controller operatively coupled to the motor-generator in the motor mode and operatively decoupled from the motor-generator in the generator mode, the engine start controller controlling a rotational speed of the motor-generator when rotatably coupled to the motor-generator.

4. The turbomachine and starter assembly of any preceding claim, wherein the gearing arrangement is a two-speed transmission.

5. The turbomachine and starter assembly of any preceding claim, wherein the turbomachine rotatably drives the motor-generator when the motor-generator operates in the generator mode.

6. The turbomachine and starter assembly of preceding claim, wherein a high-speed spool (34) of the turbomachine rotatably drives the motor-generator when operating in the generator mode.

7. The turbomachine and starter assembly of any preceding claim, wherein the motor-generator is a permanent magnet machine.

8. The turbomachine and starter assembly of any preceding claim, wherein the supply of electrical power is used to power a full authority digital electronic control.

9. A method of powering turbomachine accessories, comprising:
rotating a turbomachine during a start-up of the turbomachine using a motor-generator;
electrically decoupling a voltage regulator from the motor-generator during start-up;
generating a supply of power with the motor-generator after the start-up;
electrically coupling the voltage regulator to the motor-generator during the generating; and
using the supply of power to power an accessory of the turbomachine;
wherein the motor-generator rotates the turbomachine using a first gear ratio during start-up, and the turbomachine rotates the motor-generator using a second, different gear ratio after the start-up.

## Patentansprüche

1. Turbomaschine und Starteraggregat, umfassend:
eine Turbomaschine (10); und
ein Turbomaschinen-Starteraggregat, umfassend einen Motor-Generator (50), der selektiv in einem Motormodus oder einem Generatormodus arbeitet, wobei der Motor-Generator bei Betrieb im Motormodus eine Dreheingabe an eine Turbomaschine liefert, wobei der Motor-Generator bei Betrieb im Generatormodus Versorgung mit elektrischer Energie erzeugt, wobei die Versorgung mit elektrischer Energie dazu verwendet wird, Zubehörteile (66) der Turbomaschine zu speisen; und
eine Getriebeanordnung (54), die den Motor-Generator drehbar mit der Turbomaschine verbindet; wobei
die Getriebeanordnung ein Übersetzungsverhältnis aufweist, und das Übersetzungsverhältnis höher ist, wenn der Motor-Generator im Motormodus ist, als das Übersetzungsverhältnis wenn der Motor-Generator im Generatormodus ist;
**dadurch gekennzeichnet, dass** das Aggregat ferner einen Spannungsregler umfasst, der im Generatormodus elektrisch mit dem Motor-Generator gekoppelt ist und im Motormodus elektrisch vom Motor-Generator entkoppelt ist, wobei der Spannungsregler die Versorgung mit elektrischer Energie regelt, wenn er elektrisch mit dem Motor-Generator gekoppelt ist.

2. Turbomaschine und Starteraggregat nach Anspruch 1, wobei die Versorgung mit elektrischer Energie ausschließlich dazu genutzt wird, Zubehörteile der Turbomaschine zu speisen.

3. Turbomaschine und Starteraggregat nach Anspruch 1, einschließlich einer Motorstartsteuerung, die im Motormodus operativ mit dem Motor-Generator gekoppelt ist und im Generatormodus operativ vom Motor-Generator entkoppelt ist, wobei die Motorstartsteuerung eine Drehzahl des Motor-Generators steuert, wenn sie mit dem Motor-Generator drehgekoppelt ist.

4. Turbomaschine und Starteraggregat nach einem der vorhergehenden Ansprüche, wobei die Getriebeanordnung ein Zweiganggetriebe ist.

5. Turbomaschine und Starteraggregat nach einem der vorhergehenden Ansprüche, wobei die Turbomaschine den Motor-Generator in Drehung antreibt, wenn der Motor-Generator im Generatormodus betrieben wird.

6. Turbomaschine und Starteraggregat nach einem der vorhergehenden Ansprüche, wobei eine Hochgeschwindigkeitsspule (34) der Turbomaschine den Motor-Generator in Drehung antreibt, wenn der Motor-Generator im Generatormodus betrieben wird.

7. Turbomaschine und Starteraggregat nach einem der vorhergehenden Ansprüche, wobei der Motor-Generator eine Dauermagnetmaschine ist.

8. Turbomaschine und Starteraggregat nach einem der vorhergehenden Ansprüche, wobei die Versorgung mit elektrischer Energie dazu genutzt wird, eine elektronische digitale Steuerung mit voller Autorität zu speisen.

9. Verfahren zum Speisen von Turbomaschinenzubehörteilen, umfassend:
Drehen einer Turbomaschine beim Starten der Turbomaschine , bei Gebrauch eines Motor-Generators;
elektrisches Entkoppeln eines Spannungsreglers vom Motor-Generator beim Starten;
Erzeugen einer Energieversorgung mittels des Motor-Generators nach dem Starten;
elektrisches Koppeln des Spannungsreglers mit dem Motor-Generator während der Energieerzeugung; und
Gebrauch der Energieversorgung zum Speisen eines Zubehörteils der Turbomaschine;
wobei der Motor-Generator die Turbomaschine beim Starten bei einem ersten Übersetzungsverhältnis dreht, und die Turbomaschine den Motorgenerator nach dem Starten beim einem zweiten, anderen Übersetzungsverhältnis dreht.

## Revendications

1. Ensemble turbomachine et dispositif de démarrage, comprenant :
une turbomachine (10) ; et
un ensemble dispositif de démarrage de turbomachine comprenant un moteur-générateur (50) qui fonctionne sélectivement en mode moteur ou en mode générateur, le moteur-générateur fournissant une entrée rotationnelle à une turbomachine lorsqu'il fonctionne en mode moteur, le moteur-générateur générant un approvisionnement en énergie électrique lorsqu'il fonctionne en mode générateur, dans lequel l'approvisionnement en énergie électrique est utilisé pour alimenter en énergie des accessoires (66) de la turbomachine ; et
un train d'engrenages (54) couplant en rotation le moteur-générateur avec la turbomachine ;
dans lequel le train d'engrenages a un rapport d'engrenage, et
le rapport d'engrenage lorsque le moteur-générateur est en mode moteur est plus élevé que le rapport d'engrenage lorsque le moteur-générateur est en mode générateur ;
**caractérisé en ce que** ledit ensemble inclut en outre un régulateur de tension couplé électriquement au moteur-générateur en mode générateur et découplé électriquement du moteur-générateur en mode moteur, le régulateur de tension régulant l'approvisionnement en énergie électrique lorsqu'il est couplé électriquement au moteur-générateur.

2. Ensemble turbomachine et dispositif de démarrage selon la revendication 1, dans lequel l'approvisionnement en énergie électrique est utilisé exclusivement pour alimenter en énergie des accessoires de la turbomachine.

3. Ensemble turbomachine et dispositif de démarrage selon la revendication 1, incluant un dispositif de commande de démarrage de moteur couplé de manière opérationnelle au moteur-générateur en mode moteur et découplé de manière opérationnelle du moteur-générateur en mode générateur, le dispositif de commande de démarrage de moteur commandant une vitesse de rotation du moteur-générateur lorsqu'il est couplé en rotation au moteur-générateur.

4. Ensemble turbomachine et dispositif de démarrage selon une quelconque revendication précédente, dans lequel le train d'engrenages est une transmission à deux vitesses.

5. Ensemble turbomachine et dispositif de démarrage selon une quelconque revendication précédente, dans lequel la turbomachine entraîne en rotation le moteur-générateur lorsque le moteur-générateur fonctionne en mode générateur.

6. Ensemble turbomachine et dispositif de démarrage selon la revendication précédente, dans lequel une bobine à grande vitesse (34) de la turbomachine entraîne en rotation le moteur-générateur lorsqu'il fonctionne en mode générateur.

7. Ensemble turbomachine et dispositif de démarrage selon une quelconque revendication précédente, dans lequel le moteur-générateur est une machine à aimants permanents.

8. Ensemble turbomachine et dispositif de démarrage selon une quelconque revendication précédente, dans lequel l'approvisionnement en énergie électrique est utilisé pour alimenter en énergie un système de régulation électronique numérique à pleine autorité.

9. Procédé d'alimentation en énergie d'accessoires de turbomachine, comprenant :
la rotation d'une turbomachine pendant un démarrage de la turbomachine à l'aide d'un moteur-générateur ;
le fait de découpler électriquement un régulateur de tension et le moteur-générateur pendant un démarrage ;
la génération d'un approvisionnement en énergie avec le moteur-générateur après le démarrage ;
le couplage électrique du régulateur de tension au moteur-générateur pendant la génération ; et
l'utilisation de l'approvisionnement en énergie pour alimenter en énergie un accessoire de la turbomachine ;
dans lequel le moteur-générateur entraîne en rotation la turbomachine à l'aide d'un premier rapport d'engrenage pendant un démarrage, et la turbomachine entraîne en rotation le moteur-générateur à l'aide d'un second rapport d'engrenage différent après le démarrage.
